(19) Europäisches Patentamt European Patent Office Office européen des brevets

(11) **EP 3 851 669 B1**

(12) **EUROPEAN PATENT SPECIFICATION**

(45) Date of publication and mention of the grant of the patent:
**15.11.2023 Bulletin 2023/46**

(21) Application number: **21150092.1**

(22) Date of filing: **04.01.2021**

(51) International Patent Classification (IPC):
**F03D 7/02** *(2006.01)*     **F03D 17/00** *(2016.01)*

(52) Cooperative Patent Classification (CPC):
**F03D 7/028; F03D 17/00;** F05B 2270/20;
F05B 2270/32; F05B 2270/323; F05B 2270/324;
F05B 2270/331; F05B 2270/332; Y02E 10/72

(54) **SYSTEMS AND METHODS FOR OPERATION OF WIND TURBINES USING IMPROVED POWER CURVES**

SYSTEME UND VERFAHREN ZUM BETRIEB VON WINDTURBINEN MIT VERBESSERTEN LEISTUNGSKENNLINIEN

SYSTÈMES ET PROCÉDÉS DE FONCTIONNEMENT D'ÉOLIENNES UTILISANT DES COURBES DE PUISSANCE AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.01.2020 US 202016744498**

(43) Date of publication of application:
**21.07.2021 Bulletin 2021/29**

(73) Proprietor: **General Electric Company Schenectady, NY 12345 (US)**

(72) Inventors:
• **Wang, Siyun**
  **Niskayuna, NY 12309 (US)**
• **Kammer, Leonardo Cesar**
  **Niskayuna, NY 12309 (US)**
• **Wheeler, Frederick Wilson**
  **Niskayuna, NY 12309 (US)**
• **Arora, Dhiraj**
  **Niskayuna, NY 12309 (US)**

(74) Representative: **Zimmermann & Partner Patentanwälte mbB Postfach 330 920 80069 München (DE)**

(56) References cited:
EP-A1- 3 415 754     EP-A2- 2 128 437
US-A1- 2012 139 244     US-A1- 2015 252 786

EP 3 851 669 B1

**Description**

BACKGROUND

The field of the invention relates generally to wind turbine control systems, and more particularly, to systems and methods for operation of wind turbines using improved power curves.

Most known wind turbines include a rotor having multiple blades. The rotor is sometimes coupled to a housing, or nacelle, that is positioned on top of a base, for example, a tubular tower. At least some known utility grade wind turbines, i.e., wind turbines designed to provide electrical power to a utility grid, have rotor blades having predetermined shapes and dimensions. The rotor blades transform kinetic wind energy into blade aerodynamic forces that induce a mechanical rotational torque to drive one or more generators, subsequently generating electric power.

Wind turbines are exposed to large variations in wind inflow, which exert varying loads on the wind turbine structure, particularly the wind turbine rotor and shaft. Some known wind turbines include sensor assemblies to detect characteristics of the wind such as direction and speed remotely. The detected wind characteristics may be used to control mechanical loads of the wind turbine. For example, based on a detected wind speed, the wind turbine may be controlled to operate at a particular output power. The output power is generally selected using a power curve. At least some known power curves are generally flat above a certain threshold wind speed. That is, when the current wind speed at a wind turbine is above a threshold level, the selected output power is constant with respect to wind speed. US 2012/0139244 A1 relates to a system for control of wind turbines. US 2015/0252786 A1 relates to method for robust wind turbine operation. In at least some cases, controlling a wind turbine in this manner leads to suboptimal annual energy production (AEP), wind turbine lifetime, and/or other operating characteristics of the wind turbine. An improved control system for wind turbines is therefore desirable.

BRIEF DESCRIPTION

In one aspect, a wind turbine controller according to independent claim 1 is disclosed. A wind turbine controller is communicatively coupled to a wind turbine and at least one sensor configured to detect at least environmental condition associated with the wind turbine. The wind turbine controller includes at least one processor in communication with at least one memory device. The at least one processor is configured to retrieve at least one wind condition variable associated with the wind turbine, retrieve a power curve, the power curve generated based on the at least one wind condition variable by computing, for each of a plurality of wind speed values, a power value, receive, from the at least one sensor, sensor data, and control the wind turbine using the generated power curve based on the received sensor data.

Further, a wind turbine control system is disclosed. The wind turbine control system includes a wind turbine, at least one sensor configured to detect at least one environmental condition associated with the wind turbine, and a wind turbine controller communicatively coupled to the wind turbine and the at least one sensor. The wind turbine controller includes at least one processor in communication with at least one memory device. The at least one processor is configured to retrieve at least one wind condition variable associated with the wind turbine, retrieve a power curve, the power curve generated based on the at least one wind condition variable by computing, for each of a plurality of wind speed values, a power value, receive, from the at least one sensor, sensor data, and control the wind turbine using the generated power curve based on the received sensor data.

In another aspect, a method for controlling a wind turbine using a wind turbine controller according to the independent method claim is disclosed. A wind turbine controller is communicatively coupled to a wind turbine and at least one sensor configured to detect at least environmental condition associated with the wind turbine. The wind turbine controller includes at least one processor in communication with at least one memory device. A method includes retrieving, by the wind turbine controller, at least one wind condition variable associated with the wind turbine, retrieving, by the wind turbine controller, a power curve, the power curve generated based on the at least one wind condition variable by computing, for each of a plurality of wind speed values, a power value, receiving, by the wind turbine controller, from the at least one sensor, sensor data, and controlling, by the wind turbine controller, the wind turbine using the generated power curve based on the received sensor data.

DRAWINGS

These and other features, aspects, and advantages of the present disclosure will become better understood when the following detailed description is read with reference to the accompanying drawings in which like characters represent like parts throughout the drawings, wherein:

FIG. 1 is a perspective view of an exemplary wind turbine.

FIG. 2 is a block diagram of an exemplary wind turbine control system for use in controlling the wind turbine shown in FIG. 1.

FIG. 3 is a graph illustrating exemplary power curves that may be used for controlling the wind turbine shown in FIG. 1.

FIG. 4 is a flowchart of an exemplary method for controlling a wind turbine.

FIG. 5 is a flowchart of an exemplary method for generating a power curve.

DETAILED DESCRIPTION

In the following specification and the claims, reference will be made to a number of terms, which shall be defined to have the following meanings.

The singular forms "a", "an", and "the" include plural references unless the context clearly dictates otherwise.

Approximating language, as used herein throughout the specification and claims, may be applied to modify any quantitative representation that could permissibly vary without resulting in a change in the basic function to which it is related. Accordingly, a value modified by a term or terms, such as "about," "substantially," and "approximately," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

The embodiments described herein include a wind turbine control system including a wind turbine, at least one sensor configured to detect at least one environmental condition associated with the wind turbine, and a wind turbine controller communicatively coupled to the wind turbine and the at least one sensor. The wind turbine controller includes at least one processor in communication with at least one memory device. The at least one processor is configured to retrieve at least one wind condition variable associated with the wind turbine, retrieve a power curve, the power curve generated based on the at least one wind condition variable by computing, for each of a plurality of wind speed values, a power value, receive, from the at least one sensor, sensor data, and control the wind turbine using the generated power curve based on the received sensor data.

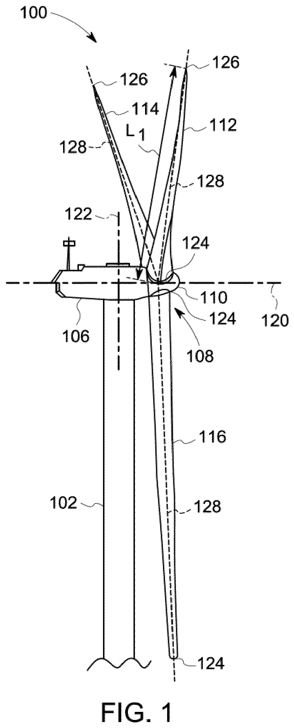

FIG. 1 is a schematic perspective view of an exemplary wind turbine 100. In the exemplary embodiment, wind turbine 100 is a horizontal axis wind turbine. Wind turbine 100 includes a tower 102 extending from a supporting surface (not shown), a nacelle 106 coupled to tower 102, and a rotor 108 coupled to nacelle 106. Rotor 108 has a rotatable hub 110 and a plurality of blades 112, 114, 116 coupled to rotatable hub 110. In the exemplary embodiment, rotor 108 has a first blade 112, a second blade 114, and a third blade 116. In alternative embodiments, rotor 108 has any number of blades 112, 114, 116 that enables wind turbine 100 to function as described herein. In the exemplary embodiment, tower 102 is fabricated from tubular steel and has a cavity (not shown in FIG. 1) extending between the supporting surface and nacelle 106. In alternative embodiments, wind turbine 100 includes any tower 102 that enables wind turbine 100 to operate as described herein. For example, in some embodiments, tower 102 is any one of a lattice steel tower, guyed tower, concrete tower and hybrid tower.

In the exemplary embodiment, blades 112, 114, 116 are positioned about rotatable hub 110 to facilitate rotating rotor 108 when wind flows through wind turbine 100. When rotor 108 rotates, kinetic energy from the wind is transferred into usable mechanical energy, and subsequently, electrical energy. During operation, rotor 108 rotates about a rotation axis 120 that is substantially parallel to the supporting surface. In addition, in some embodiments, rotor 108 and nacelle 106 are rotated about tower 102 on a yaw axis 122 to control the orientation of blades 112, 114, 116 with respect to the direction of wind. In alternative embodiments, wind turbine 100 includes any rotor 108 that enables wind turbine 100 to operate as described herein.

In the exemplary embodiment, each blade 112, 114, 116 is coupled to rotatable hub 110 at a hub end 124 and extends radially outward from rotatable hub 110 to a distal end 126. Each blade 112, 114, 116 defines a longitudinal axis 128 extending between hub end 124 and distal end 126. In alternative embodiments, wind turbine 100 includes any blade 112, 114, 116 that enables wind turbine 100 to operate as described herein.

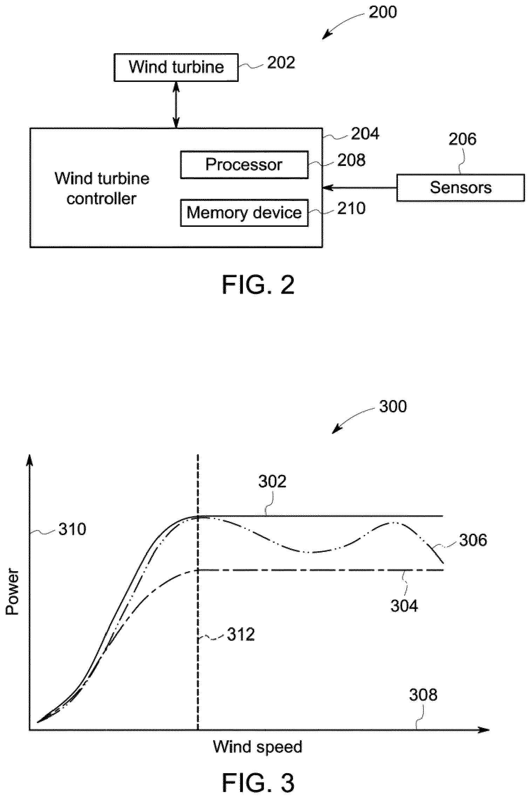

FIG. 2 is a block diagram of an exemplary wind turbine control system 200. Wind turbine control system 200 includes a wind turbine 202, a wind turbine controller 204, and one or more sensors 206. In some embodiments, wind turbine 202 is substantially similar to wind turbine 100 (shown in FIG. 1). Wind turbine controller 204 is communicatively coupled to wind turbine 202 and includes a processor 208 and a memory device 210. In some embodiments, at least some functionality of wind turbine controller 204 is performed by processor 208 and/or memory device 210.

Wind turbine 202 coverts kinetic wind energy into blade aerodynamic forces that induce a mechanical rotational torque that may be used to generate electric power. An amount of output power produced by wind turbine 202 depends on, for example, an amount of speed and/or torque of operation of wind turbine 202. In addition, other characteristics of wind turbine 202 may depend on the speed and/or torque of operation of wind turbine 202, such as a fatigue on components of wind turbine 202.

Wind turbine controller 204 controls the operation of wind turbine 202, for example, by controlling the speed, torque, thrust limit, cut-out wind speed, and/or other controller tuning parameters of wind turbine 202. For example, in some embodiments, wind turbine controller 204 may control a pitch angle of blades 112, 114, 116 (shown in FIG. 1), a yaw of wind turbine 202, a gearbox setting of wind turbine 202, and/or another operating parameter of wind turbine 202 that affects the speed and/or torque. By controlling the speed and/or torque of wind turbine 202, wind turbine controller 204 may select the output power at which wind turbine 202 operates.

In some embodiments, wind turbine controller 204 is configured to generate a power curve that may be used to control wind turbine 202. Additionally or alternatively, in some embodiments, wind turbine controller 204 is configured to retrieve the power curve, wherein the power curve has previously been generated by wind turbine controller 204 and/or another computing device. In some embodiments, the power curve may be generated based on, for example, environmental factors expected to be experienced by the wind turbine (sometimes referred to herein as "wind condition variables") and variables expected to affect operation and/or a lifetime of the wind turbine (sometimes referred to herein as "operation variables") such as, for example, fatigue loads, extreme loads, or gearbox loads. In some embodiments, wind turbine controller 204 computes, for each of a plurality of wind speed values, a corresponding power value. For example, in some embodiments, the power values are selected such that using the power curve increases an annual energy production (AEP) of the wind turbine without substantially decreasing a lifetime of the wind turbine. During operation of wind turbine 202, when one of the plurality of wind speeds is detected by sensors 206, wind turbine controller controls wind turbine 202 to operate at the corresponding power value using the generated power curve.

In some embodiments, to generate power curves, wind turbine controller 204 considers several wind condition variables that define environmental conditions that may be experienced by wind turbine 202, such as wind speed, turbulence intensity, air density, and/or other such factors. In some embodiments, a likelihood of particular values of wind condition variables will be experienced by wind turbine 202 is characterized by a wind condition probability distribution. Wind turbine controller 204 selects one or more such wind condition variables and discretizes the wind condition variables into a finite set of values, which enables wind turbine controller 204 to identify a finite set of possible combinations of the different wind condition variables (sometimes referred to herein as "wind condition variable combinations"). Wind turbine controller 204 computes operation variables, such as, for example, fatigue loads, extreme loads, and/or gearbox loads, for each of the identified wind condition variable combinations. In some embodiments, for each wind condition variable combination, the operation variable is computed at a plurality of different wind turbine operation points (e.g., different torques and/or speeds). Based on the computed operation variables and the wind condition probability distribution, in the exemplary embodiment, wind turbine controller 204 formulates a computational problem (e.g., an optimization problem) of maximizing AEP while meeting operation constraints such that the resulting computational problem is, for example, a mixed integer linear programming (MILP) problem. For example, the MILP problem generated to increase and/or maximize AEP subject to certain operation constraints may be:

$$\max_{p(X)\in P} AEP = k \sum\nolimits_{\prod_{i=1}^{N} F_i} w(X)p(X) \quad \text{(Equation 1)}$$

Subject to

$$S_{eq,s}^{m(s)} = \sum\nolimits_{\prod_{i=1}^{N} F_i} w(X) S_{eq,s}^{m(s)}(X, p(X)) \leq \bar{S}_{eq,s}^{m(s)}, \ \forall s \in SENSOR \quad \text{(Equation 2)}$$

where discretized wind condition combinations are defined as $F_i = \{s_{i1}, s_{i2}, \ldots, s_{i,ni}\}$, $i \in \{1,2, \ldots, N\}$ and $F_i \subset \mathcal{F}_i$, where $n_i$ is a number of elements in $F_i$, $X \in \prod_{i=1}^{N} F_i$, is defined as a discrete vector for all wind condition combinations, $w(X)$ is defined as the probability distribution for $X$, the wind turbine operation points are defined as $P = \{p_1, p_2, \ldots, p_{np}\}$ be a set of candidate wind turbine operation points, and $p(X) \in P$ is defined as the wind turbine operation point under wind condition combination X. SENSOR is the set of all key sensor locations considered in the AEP optimization, $\bar{S}_{eq,s}$ is the designed upper bound for a damage equivalent load (DEL) or any other cumulative damage measure at a particular sensor s. The overall DEL can be calculated as:

$$S_{eq}^m = \frac{1}{n_{eq}} \sum_i n_i(X, p) S_i^m = \frac{1}{n_{eq}} \sum_i \left( \int_X w(X) n_i(X, p) \, dX \right) S_i^m \quad \text{(Equation 3)}$$

where $n_i$ is the number of cycles at a particular wind condition combination and wind turbine operation point.

In some embodiments, to generate the power curve, the MILP problem is solved (e.g., by wind turbine controller 204 and/or another computing device) to generate one or more power curves. As will appreciated by those of skill in the art, MILP problems may be solved with various algorithms and software implementations. In some embodiments, the mixed integer linear problem is generated, for example, such that its solution power curves maximize and/or otherwise increase the AEP of wind turbine 202 subject to predefined limit constraints of the operation variables.

Once the one or more power curves have been generated, wind turbine controller 204 controls operation of wind turbine 202 using the one or more power curves, for example, by selecting a power curve based on wind speed and air density and using the selected power curve to determine an output power based on a current wind speed and a current air density. In some embodiments, controlling wind turbine 202 using the generated power curves may increase the AEP of wind turbine 202 relative to a flat power curve while reducing and/or minimizing any corresponding decrease in lifetime due to operating wind turbine 202 at a higher output power.

FIG. 3 is a graph 300 illustrating a first power curve 302, a second power curve 304, and a third power curve 306 that may be used for controlling wind turbine 100 (shown in FIG. 1). Graph 300 includes a horizontal axis 308 corresponding to a wind speed such as, for example, a wind speed detected at wind turbine 100. Graph 300 further includes a vertical axis 310 corresponding to an output power of wind turbine 100. The output power of wind turbine 100 may be selected based on a current wind speed using, for example, first power curve 302, second power curve 304, or third power curve 306.

The output power, when selected based on first power curve 302 or second power curve 304, generally increases as wind speed increases until a threshold wind speed 312 is reached, after which the output power remains constant. Controlling wind turbine 100 based on first power curve 302 generally results in a higher output power, and a correspondingly higher AEP, than controlling wind turbine 100 based on second power curve 304. Conversely, in some embodiments, controlling wind turbine 100 based on second power curve 304 generally results in lower fatigue, and a correspondingly longer operating lifetime of wind turbine 100, than controlling wind turbine 100 based on first power curve 302. In some embodiments, third power curve 306 is a power curve generated by wind turbine controller 204 using the systems and methods described herein, and controlling wind turbine 100 using third power curve 306 increases an AEP of wind turbine 100 while minimally increasing a fatigue of wind turbine 100.

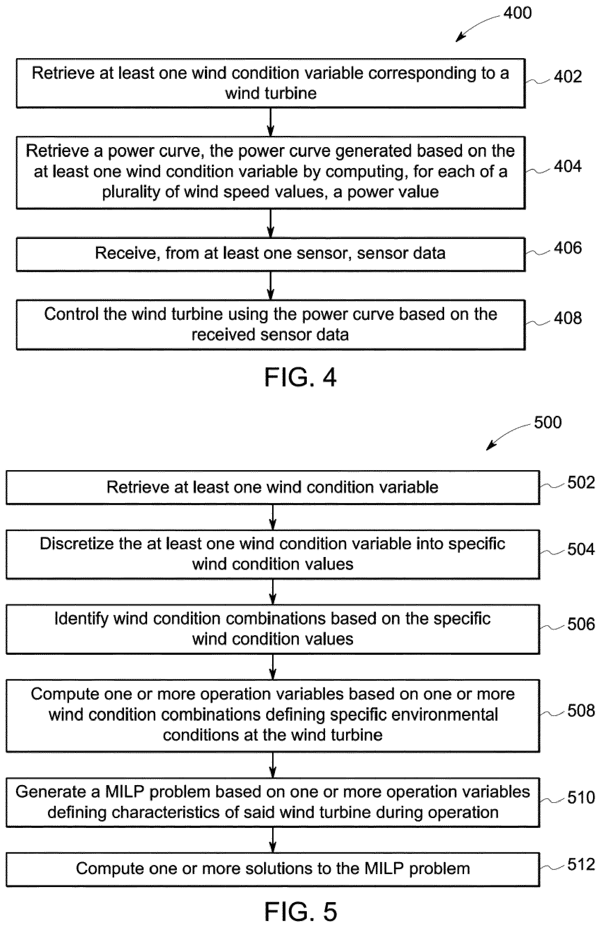

FIG. 4 illustrates an exemplary method 400 for controlling wind turbine 202. In some embodiments, method 400 is performed by wind turbine controller 204. Method 400 includes retrieving 402 at least one wind condition variable corresponding to wind turbine 202. Method 400 further includes retrieving 404 a power curve, the power curve generated based on the at least one wind condition variable by computing, for each of a plurality of wind speed values, a power value. Method 400 further includes receiving 406, from at least one sensor (such as sensors 206), sensor data. Method 400 further includes controlling 408 wind turbine 202 using the power curve based on the received sensor data.

FIG. 5 illustrates an exemplary method 500 for generating a power curve to control wind turbine 100. In some embodiments, method 500 is performed by wind turbine controller 204. Method 500 includes retrieving 502 a at least one wind condition variable. Method 500 further includes discretizing 504 the at least one wind condition variable into specific wind condition values. Method 500 further includes identifying 506 wind condition combinations based on the specific wind condition values. Method 500 further includes computing 508 one or more operation variables based on one or more wind condition combinations defining specific environmental conditions at the wind turbine. Method 500 further includes generating 510 an MILP problem based on one or more operation variables defining characteristics of the wind turbine during operation. Method 500 further includes compute one or more solutions to the MILP problem.

An exemplary technical effect of the methods, systems, and apparatus described herein includes at least one of: (a) improving an AEP of a wind turbine by controlling the wind turbine using a power curve based on environmental conditions at the wind turbine; (b) improving AEP of a wind turbine relative to a lifetime of the wind turbine by controlling the wind turbine using a power curve computed based on environmental conditions at the wind turbine; and (c) improving efficiency of generating a power curve by computing the power curve based on environmental conditions at the wind turbine, a probability distribution corresponding to the environmental conditions, and operation variables of the wind turbine.

Exemplary embodiments of a system for controlling a wind turbine are provided herein. The systems and methods of operating and manufacturing such systems and devices are not limited to the specific embodiments described herein, but rather, components of systems and/or steps of the methods may be utilized independently and separately from other components and/or steps described herein. For example, the methods may also be used in combination with other electronic systems, and are not limited to practice with only the electronic systems, and methods as described herein. Rather, the exemplary embodiment can be implemented and utilized in connection with many other electronic systems.

Some embodiments involve the use of one or more electronic or computing devices. Such devices typically include a processor, processing device, or controller, such as a general purpose central processing unit (CPU), a graphics processing unit (GPU), a microcontroller, a reduced instruction set computer (RISC) processor, an application specific integrated circuit (ASIC), a programmable logic circuit (PLC), a field programmable gate array (FPGA), a digital signal processing (DSP) device, and/or any other circuit or processing device capable of executing the functions described herein. The methods described herein may be encoded as executable instructions embodied in a computer readable medium, including, without limitation, a storage device and/or a memory device. Such instructions, when executed by a processing device, cause the processing device to perform at least a portion of the methods described herein. The above examples are exemplary only, and thus are not intended to limit in any way the definition and/or meaning of the term processor and processing device.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims.

**Claims**

1. A wind turbine controller (204) configured to be communicatively coupled to a wind turbine (100, 202) and at least one sensor (206) configured to detect at least one environmental condition associated with the wind turbine (100, 202), said wind turbine controller (204) comprising at least one processor (208) in communication with at least one memory device (210), said at least one processor (208) configured to:

   retrieve at least one wind condition variable associated with the wind turbine (100, 202);
   retrieve a power curve, the power curve generated based on the at least one wind condition variable, a probability distribution corresponding to the at least one wind condition variable, and one or more operation variables of the wind turbine (100, 202), wherein the power curve is generated by computing, for each of a plurality of wind speed values, a power value;
   receive, from the at least one sensor (206), sensor data; and
   control the wind turbine (100, 202) using the generated power curve based on the received sensor data.

2. The wind turbine controller (204) of Claim 1, wherein said at least one processor (208) is further configured to generate the power curve.

3. The wind turbine controller (204) of Claim 2, wherein to generate the power curve, said at least one processor (208) is configured to:

   generate a computational problem that increases an annual energy production (AEP) of said wind turbine (100, 202); and
   compute one or more solutions to the computational problem.

4. The wind turbine controller (204) of Claim 3, wherein the computational problem is a mixed integer linear programming (MILP) problem.

5. A wind turbine control system (200) comprising the wind turbine controller (204) of Claim 1, the wind turbine control system (200) further comprising:

   the wind turbine (100, 202); and
   the at least one sensor (206);
   wherein the wind turbine controller (204) is communicatively coupled to said wind turbine (100, 202) and said at least one sensor (206).

6. The wind turbine control system (200) of Claim 5, wherein said at least one processor (208) is further configured to generate the power curve.

7. The wind turbine control system (200) of Claim 6, wherein to generate the power curve, said at least one processor (208) is configured to:

   generate a computational problem that increases an annual energy production (AEP) of said wind turbine (100, 202); and
   compute one or more solutions to the computational problem.

8. The wind turbine control system (200) of Claim 7, wherein the computational problem is a mixed integer linear programming (MILP) problem.

9. The wind turbine control system (200) of Claim 7, wherein to generate the computational problem, said at least one processor (208) is configured to generate the computational problem based on one or more operation variables defining characteristics of said wind turbine (100, 202) during operation.

10. The wind turbine control system (200) of Claim 9, wherein the operating variables include at least one of a fatigue load, an extreme load, and a gearbox load of said wind turbine (100, 202).

11. The wind turbine control system (200) of Claim 9, wherein to generate the computational problem, said at least one processor (208) is further configured to compute the one or more operation variables based on one or more wind condition combinations defining specific environmental conditions at said wind turbine (100, 202).

12. The wind turbine control system (200) of Claim 11, wherein to compute the one or more operation variables, said at least one processor (208) is configured to:

   discretize the at least one wind condition variable into specific wind condition values; and
   identify the one or more wind condition combinations based on the specific wind condition values.

13. The wind turbine control system (200) of Claim 12, wherein to generate the computational problem, said at least one processor (208) is further configured to generate the computational problem further based on the probability distribution of the wind condition variables.

14. A method (400) for controlling a wind turbine (100, 202) using a wind turbine controller (204) communicatively coupled to the wind turbine (100, 202) and at least one sensor (206) configured to detect at least one environmental condition associated with the wind turbine (100, 202), the wind turbine controller (204) including at least one processor (208) in communication with at least one memory device (210), said method (400) comprising:

   retrieving, by the wind turbine controller (204), at least one wind condition variable associated with the wind turbine (100, 202);
   retrieving, by the wind turbine controller (204), a power curve, the power curve generated based on the at least one wind condition variable, a probability distribution corresponding to the at least one wind condition variable, and one or more operation variables of the wind turbine (100, 202), wherein the power curve is generated by computing, for each of a plurality of wind speed values, a power value;
   receiving, by the wind turbine controller (204), from the at least one sensor (206), sensor data; and
   controlling, by the wind turbine controller (204), the wind turbine (100, 202) using the generated power curve based on the received sensor data.

15. The method (400) of Claim 14, further comprising generating, by the wind turbine controller (204), the power curve.


**Patentansprüche**

1. Windturbinensteuerung (204), die so konfiguriert ist, dass sie kommunikativ mit einer Windturbine (100, 202) und mindestens einem Sensor (206) gekoppelt ist, der so konfiguriert ist, dass er mindestens eine der Windturbine (100, 202) zugeordneten Umgebungsbedingung erfasst, wobei die Windturbinensteuerung (204) mindestens einen Prozessor (208) umfasst, der mit mindestens einer Speichervorrichtung (210) kommuniziert, wobei der mindestens eine Prozessor (208) so konfiguriert ist,

   mindestens eine Windbedingungsvariable, die der Windturbine (100, 202) zugeordnet ist, abzurufen;

eine Leistungskurve abzurufen, wobei die Leistungskurve auf der Grundlage der mindestens einen Windbedingungsvariablen, einer Wahrscheinlichkeitsverteilung, die mit der mindestens einen Windbedingungsvariablen korrespondiert, und einer oder mehrerer Betriebsvariablen der Windturbine (100, 202) erzeugt wird, wobei die Leistungskurve durch Berechnen eines Leistungswerts für jeden einer Vielzahl von Windgeschwindigkeitswerten erzeugt wird;

Sensordaten von dem mindestens einen Sensor (206) zu empfangen; und

die Windturbine (100, 202) unter Verwendung der erzeugten Leistungskurve basierend auf den empfangenen Sensordaten zu steuern.

2. Windturbinensteuerung (204) nach Anspruch 1, wobei der mindestens eine Prozessor (208) ferner so konfiguriert ist, dass er die Leistungskurve erzeugt.

3. Windturbinensteuerung (204) nach Anspruch 2, wobei zum Erzeugen der Leistungskurve der mindestens eine Prozessor (208) konfiguriert ist, um:

ein Berechnungsproblem zu erzeugen, das eine jährliche Energieproduktion (AEP) der Windturbine (100, 202) erhöht; und

eine oder mehrere Lösungen für das Berechnungsproblem zu berechnen.

4. Windturbinensteuerung (204) nach Anspruch 3, wobei das Berechnungsproblem ein gemischt ganzzahliges lineares Programmierproblem (MILP) ist.

5. Windturbinenteuerungssystem (200), das die Windturbinen-Steuerung (204) nach Anspruch 1 umfasst, wobei das Windturbinensteuerungssystem (200) ferner umfasst:

die Windturbine (100, 202); und

den mindestens einen Sensor (206);

wobei die Windturbinensteuerung (204) kommunikativ mit der Windturbine (100, 202) und dem mindestens einen Sensor (206) gekoppelt ist.

6. Windturbinensteuerungssystem (200) nach Anspruch 5, wobei der mindestens eine Prozessor (208) ferner so konfiguriert ist, dass er die Leistungskurve erzeugt.

7. Windturbinensteuerungssystem (200) nach Anspruch 6, wobei um die Leistungskurve zu erzeugen der mindestens eine Prozessor (208) konfiguriert ist, um:

ein Berechnungsproblem zu erzeugen, das eine jährliche Energieproduktion (AEP) der Windturbine (100, 202) erhöht; und

eine oder mehrere Lösungen für das Berechnungsproblem zu berechnen.

8. Windturbinensteuerungssystem (200) nach Anspruch 7, wobei das Berechnungsproblem ein gemischt-ganzzahliges lineares Programmierproblem (MILP) ist.

9. Windturbinensteuerungssystem (200) nach Anspruch 7, wobei zum Erzeugen des Berechnungsproblems der mindestens eine Prozessor (208) so konfiguriert ist, dass er das Berechnungsproblem auf der Grundlage einer oder mehrerer Betriebsvariablen erzeugt, die Charakteristika der Windturbine (100, 202) während des Betriebs definieren.

10. Windturbinensteuerungssystem (200) nach Anspruch 9, wobei die Betriebsvariablen mindestens eine von einer Ermüdungslast, einer extremen Last und einer Getriebelast der Windturbine (100, 202) umfassen.

11. Windturbinensteuerungssystem (200) nach Anspruch 9, wobei zum Erzeugen des Berechnungsproblems der mindestens eine Prozessor (208) ferner so konfiguriert ist, dass er die eine oder mehreren Betriebsvariablen auf der Grundlage einer oder mehrerer Windbedingungskombinationen berechnet, die spezifische Umgebungsbedingungen an der Windturbine (100, 202) definieren.

12. Windturbinensteuerungssystem (200) nach Anspruch 11, wobei zum Berechnen der einen oder mehreren Betriebsvariablen der mindestens eine Prozessor (208) konfiguriert ist, um:

die mindestens eine Windbedingungsvariable in spezifische Windbedingungswerte zu diskretisieren; und Identifizieren der einen oder mehreren Windbedingungskombinationen auf der Grundlage der spezifischen Windbedingungswerte.

13. Windturbinensteuerungssystem (200) nach Anspruch 12, wobei zum Erzeugen des Berechnungsproblems der mindestens eine Prozessor (208) ferner so konfiguriert ist, dass er das Berechnungsproblem ferner auf der Grundlage der Wahrscheinlichkeitsverteilung der Windbedingungsvariablen erzeugt.

14. Verfahren (400) zum Steuern einer Windturbine (100, 202) unter Verwendung einer Windturbinensteuerung (204), die kommunikativ mit der Windturbine (100, 202) gekoppelt ist, und mindestens eines Sensors (206), der so konfiguriert ist, dass er mindestens eine mit der Windturbine (100, 202) verbundene Umgebungsbedingung erfasst, wobei die Windturbinensteuerung (204) mindestens einen Prozessor (208) umfasst, der mit mindestens einer Speichervorrichtung (210) kommuniziert, wobei das Verfahren (400) umfasst:

Abrufen, durch die Windturbinensteuerung (204), mindestens einer Windbedingungsvariablen, die der Windturbine (100, 202) zugeordnet ist;
Abrufen einer Leistungskurve durch die Windturbinensteuerung (204), wobei die Leistungskurve auf der Grundlage der mindestens einen Windbedingungsvariablen, einer Wahrscheinlichkeitsverteilung, die mit der mindestens einen Windbedingungsvariablen korrespondiert, und einer oder mehrerer Betriebsvariablen der Windturbine (100, 202) erzeugt wird, wobei die Leistungskurve durch Berechnen eines Leistungswerts für jeden einer Vielzahl von Windgeschwindigkeitswerten erzeugt wird;
Empfangen von Sensordaten von dem mindestens einen Sensor (206) durch die Windturbinensteuerung (204); und
Steuern der Windturbine (100, 202) durch die Windturbinensteuerung (204) unter Verwendung der erzeugten Leistungskurve basierend auf den empfangenen Sensordaten.

15. Verfahren (400) nach Anspruch 14, ferner umfassend das Erzeugen der Leistungskurve durch die Windturbinensteuerung (204).

## Revendications

1. Dispositif de commande d'éolienne (204) configuré pour être couplé de manière communicative à une éolienne (100, 202) et au moins un capteur (206) configuré pour détecter au moins une condition environnementale associée à l'éolienne (100, 202), ledit dispositif de commande d'éolienne (204) comprenant au moins un processeur (208) en communication avec au moins un dispositif de mémoire (210), ledit au moins un processeur (208) étant configuré pour :

récupérer au moins une variable d'état de vent associée à l'éolienne (100, 202) ;
récupérer une courbe de puissance, la courbe de puissance générée sur la base de l'au moins une variable d'état de vent, une distribution de probabilité correspondant à l'au moins une variable d'état de vent, et une ou plusieurs variables de fonctionnement de l'éolienne (100, 202), dans lequel la courbe de puissance est générée en calculant, pour chacune d'une pluralité de valeurs de vitesse de vent, une valeur de puissance ;
recevoir, à partir de l'au moins un capteur (206), des données de capteur ; et
commander l'éolienne (100, 202) à l'aide de la courbe de puissance générée sur la base des données de capteur reçues.

2. Dispositif de commande d'éolienne (204) selon la revendication 1, dans lequel ledit au moins un processeur (208) est en outre configuré pour générer la courbe de puissance.

3. Dispositif de commande d'éolienne (204) selon la revendication 2, dans lequel, pour générer la courbe de puissance, ledit au moins un processeur (208) est configuré pour :

générer un problème de calcul qui augmente une production annuelle d'électricité (AEP) de ladite éolienne (100, 202) ; et
calculer une ou plusieurs solutions au problème de calcul.

4. Dispositif de commande d'éolienne (204) selon la revendication 3, dans lequel le problème de calcul est un problème de programmation linéaire en nombres entiers (PLNE).

5. Système de commande d'éolienne (200) comprenant le dispositif de commande d'éolienne (204) selon la revendication 1, le système de commande d'éolienne (200) comprenant en outre :

l'éolienne (100, 202) ;
et l'au moins un capteur (206) ;
dans lequel le dispositif de commande d'éolienne (204) est couplé de manière communicative à ladite éolienne (100, 202) et ledit au moins un capteur (206).

6. Système de commande d'éolienne (200) selon la revendication 5, dans lequel ledit au moins un processeur (208) est en outre configuré pour générer la courbe de puissance.

7. Système de commande d'éolienne (200) selon la revendication 6, dans lequel, pour générer la courbe de puissance, ledit au moins un processeur (208) est configuré pour :

générer un problème de calcul qui augmente une production annuelle d'électricité (AEP) de ladite éolienne (100, 202) ; et
calculer une ou plusieurs solutions au problème de calcul.

8. Système de commande d'éolienne (200) selon la revendication 7, dans lequel le problème de calcul est un problème de programmation linéaire en nombres entiers (PLNE).

9. Système de commande d'éolienne (200) selon la revendication 7, dans lequel, pour générer le problème de calcul, ledit au moins un processeur (208) est configuré pour générer le problème de calcul sur la base d'une ou plusieurs variables de fonctionnement définissant des caractéristiques de ladite éolienne (100, 202) pendant qu'elle fonctionne.

10. Système de commande d'éolienne (200) selon la revendication 9, dans lequel les variables de fonctionnement comportent au moins l'une parmi une charge de fatigue, une charge extrême et une charge de réducteur de ladite éolienne (100, 202).

11. Système de commande d'éolienne (200) selon la revendication 9, dans lequel, pour générer le problème de calcul, ledit au moins un processeur (208) est en outre configuré pour calculer la ou les variables de fonctionnement sur la base d'une ou plusieurs combinaisons d'état de vent, définissant des conditions environnementales spécifiques au niveau de ladite éolienne (100, 202).

12. Système de commande d'éolienne (200) selon la revendication 11, dans lequel, pour calculer la ou les variables de fonctionnement, ledit au moins un processeur (208) est configuré pour :

discrétiser l'au moins une variable d'état de vent en valeurs d'état de vent spécifiques ; et
identifier la ou les combinaisons d'états de vent sur la base des valeurs d'état de vent spécifiques.

13. Système de commande d'éolienne (200) selon la revendication 12, dans lequel, pour générer le problème de calcul, ledit au moins un processeur (208) est en outre configuré pour générer le problème de calcul sur la base en outre de la distribution de probabilité des variables d'état de vent.

14. Procédé (400) pour commander une éolienne (100, 202) à l'aide d'un dispositif de commande d'éolienne (204) couplé de manière communicative à l'éolienne (100, 202) et au moins un capteur (206) configuré pour détecter au moins une condition environnementale associée à l'éolienne (100, 202), le dispositif de commande d'éolienne (204) comportant au moins un processeur (208) en communication avec au moins un dispositif de mémoire (210), ledit procédé (400) comprenant :

la récupération, par le dispositif de commande d'éolienne (204), d'au moins une variable d'état de vent associée à l'éolienne (100, 202) ;
la récupération, par le dispositif de commande d'éolienne (204), d'une courbe de puissance, la courbe de puissance générée sur la base de l'au moins une variable d'état de vent, d'une distribution de probabilité correspondent à l'au moins une variable d'état de vent, et d'une ou plusieurs variables de fonctionnement de l'éolienne (100, 202), dans lequel la courbe de puissance est générée en calculant, pour chacune d'une pluralité de valeurs de vitesse de vent, une valeur de puissance ;

la réception, par le dispositif de commande d'éolienne (204), depuis l'au moins un capteur (206), de données de capteur ; et

la commande, par le dispositif de commande d'éolienne (204), de l'éolienne (100, 202) à l'aide de la courbe de puissance générée sur la base des données de capteur reçues.

15. Procédé (400) selon la revendication 14, comprenant en outre la génération, par le dispositif de commande d'éolienne (204), de la courbe de puissance.

FIG. 1

FIG. 2

FIG. 3

400

| Retrieve at least one wind condition variable corresponding to a wind turbine | 402 |

↓

| Retrieve a power curve, the power curve generated based on the at least one wind condition variable by computing, for each of a plurality of wind speed values, a power value | 404 |

↓

| Receive, from at least one sensor, sensor data | 406 |

↓

| Control the wind turbine using the power curve based on the received sensor data | 408 |

## FIG. 4

500

| Retrieve at least one wind condition variable | 502 |

↓

| Discretize the at least one wind condition variable into specific wind condition values | 504 |

↓

| Identify wind condition combinations based on the specific wind condition values | 506 |

↓

| Compute one or more operation variables based on one or more wind condition combinations defining specific environmental conditions at the wind turbine | 508 |

↓

| Generate a MILP problem based on one or more operation variables defining characteristics of said wind turbine during operation | 510 |

↓

| Compute one or more solutions to the MILP problem | 512 |

## FIG. 5

**EP 3 851 669 B1**

**Patent documents cited in the description**

- US 20120139244 A1
- US 20150252786 A1